# EUROPÄISCHE PATENTSCHRIFT

(11) **EP 0 706 931 B1**
(45) Veröffentlichungstag und Bekanntmachung des Hinweises auf die Patenterteilung: **09.04.1997**
(21) Anmeldenummer: 95115373.3
(22) Anmeldetag: 29.09.1995
(51) Int. Cl.: B62D 33/03, B60P 1/44

(54) **Vorrichtung zum Schwenken eines ersten Teiles einer Faltbordwand relativ zu einem zweiten Teil**
Device for rotating a first part of a folding panel relatively to a second part
Dispositif pour déplacer en rotation une première partie d'un panneau repliable, par rapport à une deuxième partie

(30) Priorität: 10.10.1994 DE 4436089
(43) Veröffentlichungstag der Anmeldung: 17.04.1996
(73) Patentinhaber: Bär, Gerd, D-74078 Heilbronn (DE)
(72) Erfinder: Bär, Gerd, D-74078 Heilbronn (DE); Kappeler, Achim, Dipl.-Ing., D-74235 Erlenbach (DE)
(74) Vertreter: Kinkelin, Ulrich, Dipl.-Ing.

(56) Entgegenhaltungen:
- EP-A- 0 047 730
- EP-A- 0 389 378
- DE-A- 3 737 651
- DE-U- 7 637 445
- US-A- 3 801 151

## Beschreibung

Die Erfindung bezieht sich auf eine Vorrichtung gemäß dem Oberbegriff des Anspruchs 1.

Die Ausdrücke "horizontal" und "senkrecht", sowie "vertikal" sind als vereinfachende sprachliche Definitionen zu verstehen, die natürlich nur dann exakt zutreffen, wenn ein Fahrzeug, an dem die Vorrichtung angebracht ist, seinerseits auf einer genau horizontalen Ebene steht. Die Angaben beziehen sich zudem auf die normale Betriebslage der Vorrichtung.

Der Vorteil einer Faltbordwand besteht darin, daß sie in der Fahrstellung unter dem Fahrzeugrahmen verstaut wird und kein besonderes Abschlußprofil am Fahrzeugheck erfordert. Nachteilig ist, daß zum Ausfalten und Einfalten der Plattenteile ein gewisser Zeitaufwand und vor allem Körperkraft der Bedienperson erforderlich ist. Vor allem größere Plattenteile (bei einer entsprechend größeren Faltbordwand), auch wenn sie aus teurerem Aluminium hergestellt werden, sind recht schwer. Das Schwenken des beweglichen ersten Teils geschieht derart, daß er aus der einen horizontalen Endlage von Hand in die etwa senkrechte Übertotpunktlage hochgezogen wird, danach das Weiterschwenken aufgrund des Eigengewichts von Hand etwas gebremst wird. Sobald aber der bewegliche Teil flacher als etwa 45° geneigt ist, macht sich sein Eigengewicht verstärkt bemerkbar und zumeist läßt man dann den Plattenteil ungebremst in seine andere horizontale Endlage fallen. Besonders wenn die Bedienperson durch häufiges Manipulieren ermüdet ist, wird der "Fallbetrieb" zur Regel. Diese Betriebsweise beansprucht alle Lagerstellen und Bauteile sehr stark, verursacht störenden Lärm und birgt auch die Gefahr von Verletzungen. Desweiteren sind diese Ladebordwände beziehungsweise Faltbordwände aufgrund ihres Anbringungsortes immer durch Straßenschmutz verunreinigt und können deshalb meist nur mit Handschuhen angefasst werden.

Aus der DE 37 37 651 A1 ist ein allgemeiner Aufbau einer Faltbordwand zu entnehmen. An einem Hauptquerträger ist über vier Parallelogrammlenker ein Anschlußkopf vertikal verschwenkbar gelagert. Der Anschlußkopf ist der zweite Teil, an dem der erste Teil bestehend aus zwei eingefalteten Plattenteilen schwenkbar gelagert ist. Die unteren Parallelogrammlenker sind als längenveränderliche Hydraulikzylinder ausgebildet, wodurch der Anschlußkopf mittels dieser "Neigezylinder" um etwa 60° geschwenkt werden kann. Dementsprechend kann der daran abgestützte erste Teil zwischen der horizontalen Betriebslage und einer etwa 60° hochgeschwenkten Lage hydraulisch bewegt werden. An der Kolbenstange des Neigezylinders ist eine nach oben ragende Rolle befestigt, auf der das in der Staulage eingefaltete Plattenpaket aufliegt. Durch Verlagerung der Rolle relativ zur Schwenkachse des ersten Teiles kann der erste Teil zwischen der horizontalen Staulage und einer etwa 70° hochgeschwenkten Lage aktiv bewegt werden. Der erste Teil muß daher nur noch über einen Winkelbereich von etwa 50° über die Totpunktlage hinweg von Hand bewegt werden. Als immerhin teilweise aktiv schwenkbarer erster Teil kommt bei diesem System nur das aus zwei Plattenteilen bestehende Plattformpaket in Frage. Das Einfalten und Ausfalten des einen Plattenteiles gegenüber dem anderen Plattenteil hingegen muß stets vollständig von Hand ausgeführt werden.

Dadurch, daß zwei der vier Parallelogrammlenker als Hydraulikzylinder mit relativ großem Hubbereich ausgebildet werden müssen, wird die Vorrichtung teuer und labil. Dennoch ist es damit nicht möglich, den gesamten Einfalt- oder Ausfaltvorgang ohne Handhilfe ablaufen zu lassen. Auch ist es bei der bekannten Vorrichtung nicht möglich, das Einfalten und Ausfalten der Plattformteile zueinander mit maschineller Kraft durchzuführen.

Des weiteren ist in der EP 0 047 730 A1 eine Ladevorrichtung für Fahrzeuge mit einer Schwenkvorrichtung nach dem Oberbegriff des Anspruchs 1 beschrieben. Diese Ladevorrichtung besitzt eine Ladeplattform, die mittels eines Lenkerparallelogramms, das zwei Parallelogrammstreben aufweist, heb- und senkbar ist. Um die gesamte Ladevorrichtung bei Nichtgebrauch unter die Ladefläche eines Fahrzeuges bringen zu können, sind beide Parallelogrammstreben an einem Arm angelenkt, der unterhalb der Ladefläche vorgesehen ist und mittels eines Schubmotors verschwenkbar ist. An dem Lenkerparallelogramm ist eine zweiteilige Ladeplattform vorgesehen, die aus einem schwenkbar an den Parallelogrammstreben angeordneten Festteil und einem an dem Festteil angeordneten Faltteil besteht. Vor oder nach Gebrauch der Ladeplattform ist erforderlich, daß mit einem hydraulischen Schubmotor der Arm betätigt wird. Ein zweiter hydraulischer Schubmotor betätigt die am Lenkerparallelogramm gelenkig gelagerte Ladeplattform. Sobald die Ladeplattform aus einer Nichtgebrauchsposition in eine Gebrauchsposition oder umgekehrt übergeführt wird, ist erforderlich, daß eine Ansteuerung eines dritten hydraulischen Schubmotors erfolgt, der die zweiteilige Ladeplattform betätigt.

Durch diese Ausbildung und Anordnung der Schubmotoren an der Ladevorrichtung ist eine bauteilintensive Ausgestaltung und aufwendige Ansteuerung zum Aus- und Einfalten der Plattenteile erforderlich.

Aufgabe der Erfindung ist es, eine Vorrichtung der gattungsgemäßen Art zu schaffen, die es ermöglicht, den gesamten Schwenkvorgang an sich beliebiger Teil einer Faltbordwand mit einer einfachen und kostengünstigen Ansteuerung ablaufen zu lassen.

Diese Aufgabe wird durch die Merkmale des Anspruchs 1 gelöst.

Der Schwenkantrieb ist ein in der Praxis vielfältig bewährter, einfachwirkender Hydraulikzylinder und daher sehr preisgünstig. Der Hydraulikzylinder ist beidendig ausschließlich schwenkbar angelenkt, so daß kein größeres Bewegungsspiel vorgesehen werden muß. Dieser sehr einfachen und robusten Anordnung liegt das Konzept zugrunde, den ersten Teil zunächst durch Aktivierung des Hydraulikzylinders hoch zu drücken und die Trägheit der somit beschleunigten Masse dazu zu verwenden, den ersten Teil weiter über die Totpunktlage hinweg zu schwingen, woraufhin der Hydraulikzylinder bei der anschließenden gravitationsgetriebenen Schwenkphase als passive Bewegungsbremse eingesetzt wird. Der Schwenkantrieb ist unabhängig von spezifischen Lagerelementen der Faltbordwand, das heißt, es wird nicht (zu diesem Zweck) ein Anschlußkopf geschwenkt oder ein Parallelogrammlenker längenveränderlich gemacht. Dies schließt aber nicht aus, daß Neigezylinder zum Anpassen der Faltbordwand an die Neigung der Fahrbahn verwendet werden können, wofür aber nur ein geringer Hubbereich erforderlich ist. Wegen der eigenständigen Natur des Schwenkantriebs kann ein gleichartiges System zum Schwenken der Teile eines Plattformpaketes zueinander ebenso vorgesehen werden, wie zum Schwenken des gesamten Plattformpaketes. Es ist insofern gleichgültig, was als erster Teil und was als zweiter Teil vorgesehen wird. Die Bauart des Hydraulikzylinders hat auch den Vorteil, daß in der Ruhelage der Faltbordwand die Kolbenstange im Zylindergehäuse eingezogen und daher gegen Schmutzeinwirkung geschützt ist.

Des weiteren weist diese einfache und robuste Anordnung den Vorteil auf, daß hinsichtlich der Bewegungskinematik symmetrische Verhältnisse beim Ausschwenken und Einschwenken des ersten Teiles durch den Massenschwerpunkt in der imaginären Ebene geschaffen ist, was den Steuervorgang vereinfacht.

Die Ansprüche 2 und 3 benennen die vorzugsweisen Einsatzbereiche des Schwenkantriebs.

Weitere Vorteile und Ausgestaltungen der Erfindung ergeben sich aus der nachfolgenden Beschreibung eines Ausführungsbeispieles anhand der Zeichnung.

Es zeigt:
- Fig.1: eine schematisch vereinfachte Seitenansicht des Hecks eines Lastkraftwagens mit zwei Vorrichtungen gemäß der Erfindung,
- Fig.2: einen Teilbereich einer Vorrichtung aus Fig. 1 in mehreren schematisch angedeuteten Schwenkpositionen, sowie das Schema einer zugehörigen Steuervorrichtung.

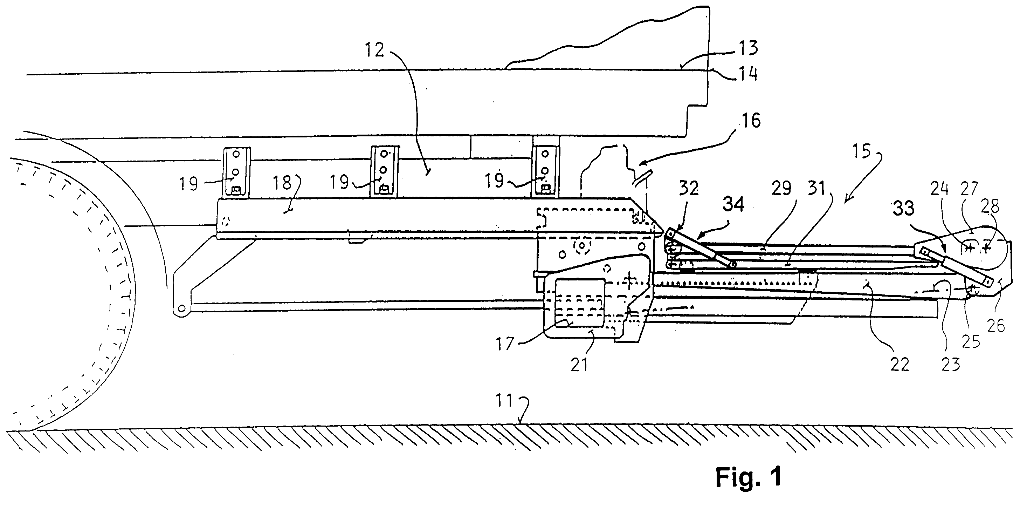

Gemäß Fig.1 steht auf einer Fahrbahn 11 ein Lastkraftwagen, von dem nur das Heck in schematisch stark vereinfachter Weise gezeichnet ist. Der Fahrzeugaufbau hat einen nur angedeuteten Fahrgestellrahmen und einen Hilfsrahmen mit zwei beidseits der Fahrzeuglängsachse parallel und horizontal liegenden Längsträgern 12. Oberhalb der Längsträger 12 befindet sich der Boden 13, auf dem die Ladegüter abgestellt werden. Der Boden 13 hat eine Hinterkante 14, an die eine Plattform einer Faltbordwand 15 anschließt, wenn sie sich in ihrer oberen Arbeitsposition befindet. Unterhalb des Bodens 13 ist eine Anhängerkupplung 16 angedeutet.

Der allgemeine Aufbau der Faltbordwand 15 ist von an sich bekannter Art und braucht daher nur grob beschrieben zu werden. Sie besteht aus einem Hauptquerträger 17, der ein stabiles Hohlprofil ist und sich etwa über die ganze Breite des Fahrzeugaufbaus erstreckt. Er ist unterhalb der Längsträger 12 horizontal und quer zur Fahrzeuglängsachse ausgerichtet beispielsweise an einer Schiebeführung 18 horizontal verschiebbar gelagert. Die Schiebeführung 18 ist mit Konsolen 19 an den Längsträgern 12 befestigt. An den beiden Endbereichen des Hauptquerträgers 17 ist je ein Lenkerkopf 21 angebracht, an deren rückwärtigen Kanten je ein oberer Parallelogrammlenker 22 und ein unterer Parallelogrammlenker 23, von dem der besseren Übersicht wegen nur die Wirkungslinie strichpunktiert angedeutet ist, schwenkbar angelenkt sind. Die anderen Enden der Parallelogrammlenker 22, 23 tragen über Gelenkachsen 24, 25 einen Anschlußkopf 26, an dem wiederum beidseits deckungsgleich ausgerichtete Lagerplatten 27 über eine horizontale Schwenkachse 28 schwenkbar gelagert sind.

Die Lagerplatten 27 sind an den gegenüberliegenden Außenkanten eines Plattformteiles befestigt, das Festteil 29 genannt wird, obgleich es um die Schwenkachse 28 aus der dargestellten Fahrstellung in eine um 180° nach hinten ausgeschwenkte Arbeitsstellung verschwenkt werden kann. Am zur Schwenkachse 28 gegenüberliegenden Ende des Festteiles 29 ist ein weiteres Plattformteil, das Faltteil 31, über Doppelgelenke 32 angeschlossen, wodurch bezüglich des Faltteiles 31 eine weitere Schwenkachse gebildet wird. Das Faltteil 31 kann aus der dargestellten gefalteten Fahrstellung in eine entfaltete Arbeitsstellung geschwenkt werden, in der das Faltteil 31 und das Festteil 29 im wesentlichen eine zusammenhängende ebene Plattform bilden. Mittels an sich bekannter und daher hier nicht besonders dargestellter Hydraulikzylinder werden die Parallelogrammlenker 22, 23 auf und ab geschwenkt, wodurch die in die Arbeitsstellung ausgefaltete Plattform zwischen dem Niveau der Fahrbahn 11 und dem Niveau des Bodens 13 verlagert werden kann.

Um das Aus- und Einschwenken des Festteils 29 gemeinsam mit dem eingefalteten Faltteil 31 um die Schwenkachse 28 zu bewirken, ist ein erster Schwenkantrieb 33 vorgesehen. Ein im wesentlichen gleicher zweiter Schwenkantrieb 34 bewirkt das Aus- und Einschwenken des Faltteiles 31 gegenüber dem Festteil 29.

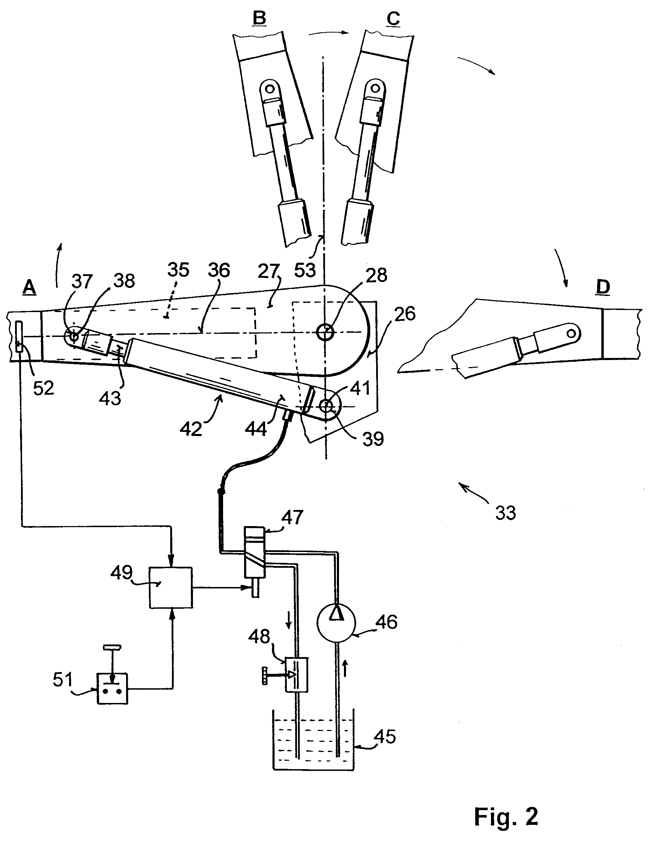

Bei dem in der Fig. 2 dargestellten Ausführungsbeispiel des ersten Schwenkantriebs 33 stellt das Festteil 29 zusammen mit dem gemäß Fig.1 eingefalteten Faltteil 31 einen ersten Teil 35 dar, der um die Schwenkachse 28 relativ zu dem Anschlußkopf 26 schwenkbar ist, welcher hierbei den zweiten Teil darstellt. Die Zusammenfassung von Festteil 29 und Faltteil 31 zu einem ersten Teil 35 ist insofern von Bedeutung, als beide Plattenteile einen gemeinsamen Masseschwerpunkt aufweisen, der in einer imaginären Ebene 36 liegt, in der auch die Schwenkachse 28 liegt.

Am ersten Teil 35 (beispielsweise an der Außenseite einer der Lagerplatten 27) ist mit radialem Abstand zur Schwenkachse 28 ein Lagerbolzen 37 angeschweißt. Er bildet eine erste Lagerachse 38, die in der imaginären Ebene 36 liegt und parallel zur Schwenkachse 28 ausgerichtet ist. Am zweiten Teil 26 ist mit radialem Vertikalabstand senkrecht unterhalb der Schwenkachse 28 ein Lagerbolzen 39 angeschweißt, der eine zweite Lagerachse 41 bildet, die parallel zur Schwenkachse 28 ausgerichtet ist. Als Schwenkantrieb ist ein einfachwirkender Hydraulikzylinder 42 vorgesehen, der mit dem freien Ende seiner Kolbenstange 43 um die erste Lagerachse 38 schwenkbar am Lagerbolzen 37 gelagert ist und der mit dem gegenüberliegenden Ende seines Zylindergehäuses 44 um die zweite Lagerachse 41 schwenkbar am Lagerbolzen 39 gelagert ist.

Es versteht sich, daß insbesondere bei breiteren Faltbordwänden zwei derartige identische Schwenkantriebe beidseits der Faltbordwand angebracht werden können. Wegen deren Identität kann sich die Beschreibung der Einfachheit wegen auf den Schwenkantrieb an einer Plattformseite beschränken

Die in Fig.2 schematisch angedeutete Steuervorrichtung umfaßt einen Hydraulikbehälter 45, eine Hydraulikpumpe 46, ein elektromagnetisch betätigbares Umschaltventil 47, ein Drosselventil 48 mit vorzugsweise einstellbarem Strömungswiderstand, eine Steuerelektronik 49, einen Einschalttaster 51 und einen Lagesensor 52, der zumindest ein Lagesignal abgibt, welches anzeigt, daß sich der erste Teil 35 in einer Stellung befindet, in der sich die imaginäre Ebene 36 in einem vorgegebenen Bereich vor der vertikalen Ausrichtung befindet.

Beginnend mit der Fahrstellung (Stellung A in Fig.2), in der die Kolbenstange 43 eingezogen ist, wird der Ausschwenkvorgang des ersten Teiles 35 durch Betätigung des Einschalttasters 51 gestartet. Dadurch aktiviert die Steuerelektronik 49 die Magnetspule des Umschaltventiles 47, welches damit aus der gezeichneten Ruhestellung in die Arbeitsstellung umgeschaltet wird. Das von der Hydraulikpumpe 46 aus dem Hydraulikbehälter 45 angesaugte Hydrauliköl wird infolgedessen dem Hydraulikzylinder 42 mit Druck zugeführt. Dadurch beginnt die Kolbenstange 43 auszufahren und der erste Teil 35 wird im Uhrzeigersinn um die Schwenkachse 28 hochgeschwenkt. Etwa wenn er die Stellung B erreicht, gibt der Lagesensor 52 ein Signal an die Steuerelektronik 49, die daraufhin wieder das Umschaltventil in die Ruhestellung zurück setzt. Der Schwung des ersten Teiles 35 schwenkt diesen über die Totpunktlage, in der die Kolbenstange 43 am weitesten ausgefahren ist, weiter in die Stellung C . Durch das Eigengewicht schwenkt schließlich der erste Teil 35 weiter bis zur ausgeschwenkten Betriebsstellung D , wobei die einfahrende Kolbenstange 43 das Hydrauliköl über das Umschaltventil 47 und das Drosselventil 48 in den Hydraulikbehälter 45 zurück drückt. Infolgedessen wird dieser gravitationsgetriebene Bewegungsabschnitt gebremst.

Der umgekehrte Schwenkvorgang wird durch erneutes Betätigen des Einschalttasters 51 ausgelöst und läuft analog ab, wobei der Lagesensor 52 das Zurückschalten des Umschaltventiles 47 in der Stellung C auslöst.

Das vorgenannte Zurückschalten des Umschaltventiles 47 sollte theoretisch so auf die Schwenkbewegung abgestimmt sein, daß der Hydraulikzylinder 42 den ersten Teil 35 einerseits möglichst nahe bis zur Totpunktlage antreibt, aber andererseits möglichst sofort nach dem Überschreiten der Totpunktlage nicht mehr mit der Hydraulikpumpe 46 verbunden ist, um das Überschwenken am wenigsten zu behindern. Da jedoch der Umschaltvorgang des Umschaltventiles 47 eine gewisse Zeit braucht und der Hydraulikzylinder 42 ohnehin in einem Übergangsbereich um die Totpunktlage nur wenig Einfluß auf die Bewegung des ersten Teiles hat, ist es tatsächlich nicht so wichtig, den Umschaltvorgang so exakt auszulösen. Es genügt vielmehr die Auslösung dann, wenn sich die imaginäre Ebene 36 in einem gewissen Winkelbereich zur vertikalen Position befindet. Die Grenzen dieses Winkelbereiches können beispielsweise zwischen ± 5° bezüglich einer Vertikalebene 53 liegen, welche durch die Schwenkachse 28 und die zweite Lagerachse 41 geht.

In derselben Art, wie dies anhand der Fig.2 gezeigt wurde, können beliebige Teile einer Faltbordwand relativ zueinander verschwenkt werden und insbesondere der zweite Schwenkantrieb 34 (Fig.1) ist prinzipiell ähnlich aufzubauen. Die Betriebslage, in der dann das Aus- und Einfalten des Faltteiles 31 gegenüber dem Festteil 29 stattfindet, ist dadurch gekennzeichnet, daß dann das Festteil 29 in die Stellung D von Fig.2 ausgeschwenkt ist und jetzt den zweiten "feststehenden" Teil bildet.

Die Schwenkung des Gesamtpaketes einerseits und des Faltteiles andererseits muß natürlich zeitlich aufeinanderfolgend ablaufen.

## Patentansprüche

1. Vorrichtung zum Schwenken eines ersten Teiles (35) einer Faltbordwand relativ zu einem zweiten Teil (26), wobei der erste Teil (35) eine imaginäre Ebene (36) aufweist, in der der Masseschwerpunkt des ersten Teiles (35) liegt und in der die im wesentlichen horizontal ausgerichtete Schwenkachse (28) liegt, mit einem Hydraulikzylinder (42) als Schwenkantrieb, der mit einem Ende um eine am ersten Teil (35) festgelegte erste Lagerachse (38) schwenkbar gelagert ist, die wenigstens annähernd in der imaginären Ebene (36) liegt, sowie parallel zur Schwenkachse (28) und mit radialem Abstand dazu angeordnet ist und der mit seinem anderen Ende, dessen radialer Abstand von der ersten Lagerachse (38) durch Aus- und Einfahren der Kolbenstange (43) veränderbar ist, um eine am zweiten Teil (26) festgelegte zweite Lagerachse (41) schwenkbar gelagert ist, die mit radialem Vertikalabstand wenigstens annähernd senkrecht unterhalb der Schwenkachse (28) angeordnet und parallel dazu ausgerichtet ist , wobei der Hydraulikzylinder (42) derart ausgebildet ist, daß die Kolbenstange (43) mit hydraulischem Druck ausgefahren wird,
dadurch gekennzeichnet, daß eine Steuervorrichtung (47, 49) für den Hydraulikzylinder (42) vorgesehen ist, welche zuerst zum Hochschwenken des ersten Teiles (35) aus einer im wesentlichen horizontalen ersten Stellung (A) das hydraulisch aktivierte Ausfahren der Kolbenstange (43) bewirkt, weiterhin auf gedrosseltes Einfahren der Kolbenstange (43) umstellt, sobald sich die imaginäre Ebene (36) des ersten Teiles (35) in einem vorgegebenen Winkelbereich zur vertikalen Position befindet und schließlich diese Einstellung beibehält, bis der erste Teil (35) eine im wesentlichen horizontale zweite Stellung (D) erreicht hat.

2. Vorrichtung nach Anspruch 1, dadurch gekennzeichnet, daß der zweite Teil (26) ein Anschlußkopf (26) ist, der mittels vier Parallelogrammlenkern (22, 23) vertikal gegenüber einem Hauptquerträger (17) verlagerbar geführt ist und daß der erste Teil (35) ein am Anschlußkopf (26) um die Schwenkachse (28) schwenkbar gelagertes Plattformpaket bestehend aus Festteil (29) und eingefaltetem Faltteil (31) ist.

3. Vorrichtung nach Anspruch 1, dadurch gekennzeichnet, daß der zweite Teil (26) ein an einem Anschlußkopf (26) schwenkbar gelagertes und in eine horizontale Arbeitsstellung ausgeschwenktes Festteil (29) ist und daß der erste Teil (35) ein am Festteil (29) um eine Schwenkachse (32) schwenkbar gelagertes Faltteil (31) ist.

## Claims

1. An apparatus for pivoting a first part (35) of a folding tailboard relative to a second part (26), with the first part (35) having an imaginary plane (36) in which the centre of mass of the first part (35) is situated and in which the substantially horizontally aligned pivoting axle (28) is situated, with a hydraulic cylinder (42) as pivoting drive which is swivellably held with one end about a first bearing axle (38) which is fixed on the first part (35) and is at least approximately in the imaginary plane (36) and is arranged parallel to the pivoting axle (28) and at a radial distance therefrom, and which drive is swivellably held by a second bearing axle (41) fixed on the second part (26) with its other end, whose radial distance can be changed by extending and withdrawing the piston rod (43), which axle (41) is arranged with a radial vertical distance at least approximately vertical below the pivoting axle (28) and is aligned parallel thereto, with the hydraulic cylinder (42) being arranged in such a way that the piston rod (43) is extended with hydraulic pressure, characterized in that a control apparatus (47, 49) is provided for the hydraulic cylinder (42) which causes at first the hydraulically activated extension of the piston rod (43) for pivoting upwardly the first part (35) from a substantially horizontal position (A), then changes over to partially throttled withdrawal of the piston rod (43) as soon as the imaginary plane (36) of the first part (35) is situated in a predetermined angular range to the vertical position and finally maintains this setting until the first part (35) has reached a substantially horizontal second position (D).

2. An apparatus as claimed in claim 1, characterized in that the second part (26) is a connecting head (26) which is guided displaceably with respect to the main crossmember (17) by means of four parallelogram guide rods (22, 23) and that the first part (35) is a platform package which is held swivellably about the pivoting axle (28) on the connecting head (26) and consists of fixed part (29) and folding part (31) which is folded in.

3. An apparatus as claimed in claim 1, characterized in that the second part (26) is a fixed part (29) which is swivellably held on the connecting head (26) and is pivoted out to a horizontal working position and that the first part (35) is a folding part (31) which is swivellably held about a pivoting axle (32) on the fixed part (29).

## Revendications

1. Dispositif destiné à faire pivoter une première partie (35) d'une ridelle basse relativement à une seconde partie (26), la première partie présentant un plan imaginaire (36) dans lequel se trouvent le centre de gravité de la masse de la première partie (35) et l'axe de pivotement (28) dirigé dans un sens sensiblement horizontal, avec un vérin hydraulique (42) comme moyen d'entraînement en pivotement dont une extrémité est montée sur paliers et de manière pivotante sur un premier axe de palier (38) fixé à la premiére partie (35) et se trouvant de manière au moins approximative dans le plan imaginaire (36), ce vérin (42) étant disposé parallèlement à l'axe de pivotement (28) et à une distance radiale de celui-ci et son autre extrémité, dont on peut modifier la distance radiale par rapport au premier axe de palier (38) en faisant rentrer ou sortir la tige de piston (43), étant montée sur paliers et de manière pivotante sur un second axe de palier (41) fixé à la seconde partie (26), disposé de manière au moins approximative verticalement endessous de l'axe de pivotement à une distance verticale radiale et aligné parallèlement à celui-ci, et ce vérin hydraulique (42) étant construit de manière à ce que la tige de piston (43) puisse sortir sous l'effet d'une pression hydraulique,
caractérisé en ce qu'on a prévu des moyens de commande (47, 49) pour le vérin hydraulique (42), lesquels provoquent tout d'abord la sortie activée hydrauliquement de la tige de piston (43) de manière à faire basculer la première partie (35) hors d'une première position (A) sensiblement horizontale, puis commutent sur une rentrée réduite de la tige de piston (43) dès que le plan imaginaire (36) de la première partie (35) se trouve à un angle donné par rapport à la position verticale, pour enfin maintenir cette position jusqu'à ce que la première partie (35) ait atteint une seconde position (D) sensiblement horizontale.

2. Dispositif selon la revendication 1 caractérisé en ce que la seconde partie (26) est une tête de raccordement (26), laquelle peut être guidée de manière à pouvoir se déplacer verticalement par rapport à une barre transversale principale (17) au moyen de quatre bielles (22,23) en parallélogramme et en ce que la première partie (35) est une plateforme composée montée par paliers et de manière pivotante autour de l'axe de pivotement (28) sur la tête de raccordement (26) et consistant en une partie fixe (29) et une partie repliable (31) repliée.

3. Dispositif selon la revendication 1 caractérisé en ce que la seconde partie (26) est une partie fixe (29) montée sur paliers et de manière pivotante sur une tête de raccordement (26) et pivotée vers l'extérieur de manière à se placer dans une position de travail horizontale et en ce que la première partie (35) est une partie repliable (31) fixée sur paliers sur la partie fixe (29) et pouvant pivoter autour d'un axe de pivotement (32).
